# EUROPEAN PATENT SPECIFICATION

(11) **EP 2 623 891 B1**
(45) Date of publication and mention of the grant of the patent: **30.05.2018**
(21) Application number: 11828933.9
(22) Date of filing: 22.09.2011
(51) Int. Cl.: F25B 49/02, F24F 11/00

(54) **OUTDOOR UNIT FOR REFRIGERATION DEVICE**
AUSSENEINHEIT FÜR EINE KÜHLVORRICHTUNG
UNITÉ EXTÉRIEURE POUR DISPOSITIF DE RÉFRIGÉRATION

(30) Priority: 30.09.2010 JP 2010221725
(43) Date of publication of application: 07.08.2013
(73) Proprietor: Daikin Industries, Ltd., Osaka 530-8323 (JP)
(72) Inventor: YURA, Yoshinori, Sakai-shi Osaka 591-8511 (JP); KIBO, Kousuke, Sakai-shi Osaka 591-8511 (JP); KASAHARA, Shinichi, Sakai-shi Osaka 591-8511 (JP)
(74) Representative: Hoffmann Eitle
(86) International application number: PCT/JP2011/071607
(87) International publication number: WO 2012/043376

(56) References cited:
- WO-A1-2009/041450
- JP-A- H 102 625
- JP-A- 4 363 554
- JP-A- 6 323 608
- JP-A- 7 063 399
- JP-A- H04 363 554
- JP-A- H06 323 608
- JP-A- 2002 277 023
- JP-A- 2003 536 043
- JP-A- 2006 046 838
- JP-A- 2006 138 632
- JP-U- H 076 651
- JP-U- H 076 651
- US-A- 3 390 538
- US-A- 4 590 772

## Description

### TECHNICAL FIELD

The present invention relates to an outdoor unit of a refrigeration apparatus.

### BACKGROUND ART

In the past, there have been provided air conditioning apparatuses in which the blow rate of an outdoor fan is reduced or the outdoor fan is stopped in order to ensure high-low differential pressure in the compressor, in cases in which an air-cooling operation is performed at times of low outside air. Examples of such an air conditioning apparatus include one controlled so that the rotational speed of the outdoor fan is lowered in accordance with the outside air temperature being low, as is disclosed in Patent Literature 1 (Japanese Laid-open Patent Application No. 5-71791), and one in which the outdoor fan is stopped or operated intermittently, as is disclosed in Patent Literature 2 (Japanese Laid-open Patent Application No. 4-236072).

In JP H06 323608 A there is described an air conditioning equipment, disclosing the features of the preamble of claim 1. A blower of which the number of revolutions can be controlled by an inverter and a blower which can be subjected to an ON-OFF control are provided as blowers for a condenser. First the number of revolutions of the blower is controlled so that a pressure value detected by a pressure sensor for detecting the pressure of a compressor discharged refrigerant gas be a specific value. In the case when the pressure lowers to an allowable pressure value or below, moreover, the number of revolutions of the blower is controlled so that the pressure be the specific value, after the blower is stopped.

### SUMMARY OF THE INVENTION

### <Technical Problem>

When there are a plurality of outdoor fans and a certain outdoor fan is stopped or operated intermittently in an attempt to lower the total blow rate of the fans, an outdoor fan receives a stop command, the power supply to this fan is cut off, and after a while the fan rotational speed approaches zero. It is assumed that outside air flows back in through the outlet of this outdoor fan, and the outdoor fans still operating draw in this air. Therefore, it is assumed that the quantity of air passing through the outdoor heat exchanger, which was ensured by the outdoor fans still operating, is reduced.

In view of this, an object of the present invention is to provide an outdoor unit of a refrigeration apparatus which can suppress the reduction in the total quantity of air passing through the outdoor heat exchanger, which is ensured by the plurality of outdoor fans, when the total blow rate of the fans is lowered.

### <Solution to Problem>

An outdoor unit of a refrigeration apparatus according to a first aspect of the present invention comprises an outdoor heat exchanger, a first outdoor fan, a second outdoor fan, and a fan controller. The first outdoor fan and the second outdoor fan generate an air flow passing through the outdoor heat exchanger. The fan controller transitions from a first operating state to a second operating state during low blow rate demand in which a low blow rate is desired. The first operating state is a state in which the first outdoor fan and the
second outdoor fan operate. The second operating state is a state in which the first outdoor fan continues to operate and the power supply to the second outdoor fan is cut off for a predetermined time. The fan controller, after transitioning to the second operating state and before the predetermined time passes a first threshold which is evaluated using a timer, performs fan on/off control, observation of an electric current value relating to fan motors, or observation of the fan rotational speeds. The fan on/off control is control for turning the power supply to the first outdoor fan and the second outdoor fan on and off.

In the second operating state during low blow rate demand, when the fan rotational speed of the second outdoor fan approaches zero, there is a concern that the first outdoor fan will draw in air that has flowed back in through the outlet of the second outdoor fan, and the quantity of air passing through the outdoor heat exchanger will be reduced by the first outdoor fan.

In view of this, in the outdoor unit of a refrigeration apparatus according to the first aspect of the present invention, when the blow rate of the fans is lowered, fan on/off control can be performed on the basis of the timer, observation of the electric current value relating to the fan motors, or observation of the fan rotational speeds, so as to suppress the reduction in the total quantity of air passed through the outdoor heat exchanger by the outdoor fans.

An outdoor unit of a refrigeration apparatus according to a second aspect of the present invention is the outdoor unit of a refrigeration apparatus according to the first aspect, wherein the fan controller, after transitioning to the second operating state, performs a first control within the fan on/off control. The first control is a control for operating the first outdoor fan at a first rotational speed and turning the power supply to the second outdoor fan on and off.

With the outdoor unit of a refrigeration apparatus according to the second aspect of the present invention, by performing the first control after the transition to the second operating state, the total blow rate of the outdoor fans can be reduced smoothly while suppressing sudden reductions in the quantity of air passed through the outdoor heat exchanger by the operating first outdoor fan.

An outdoor unit of a refrigeration apparatus according to a third aspect of the present invention is the outdoor unit of a refrigeration apparatus according to the second aspect, wherein the fan controller, after performing the first control within the fan on/off control, performs a second control. The second control is a control for turning the power supply to the first outdoor fan on and off and turning the power supply to the second outdoor fan on and off.
With the outdoor unit of a refrigeration apparatus according to the third aspect of the present invention, due to the air that has flowed back through the outlet of one outdoor fan being drawn in, the total blow rate of the outdoor fans can be lowered while suppressing reduction in the quantity of air being passed through the outdoor heat exchanger by the other outdoor fan.

The outdoor unit of a refrigeration apparatus according to a fourth aspect of the present invention is the outdoor unit of a refrigeration apparatus according to the third aspect, wherein the fan controller, after performing the second control within the fan on/off control, performs a third control. The third control is a control for turning the power supply to the first outdoor fan on and off and turning off the power supply to the second outdoor fan, causing the second outdoor fan to cease rotating.

With the outdoor unit of a refrigeration apparatus according to the fourth aspect of the present invention, the total blow rate of the outdoor fans can be reduced.

An outdoor unit of a refrigeration apparatus according to a fifth aspect of the present invention is the outdoor unit of a refrigeration apparatus according to the second or fourth aspect, wherein the fan controller turns the power supply to the second outdoor fan on and off during the first control, the power supply to either the first outdoor fan or the second outdoor fan on and off during the second control, and the power supply to the first outdoor fan on and off during the third control, based on the condensation temperature or condensation pressure of the refrigerant in the outdoor heat exchanger.

With the outdoor unit of a refrigeration apparatus according to the fifth aspect of the present invention, the condensation capability of the outdoor heat exchanger can be regulated.

An outdoor unit of a refrigeration apparatus according to a sixth aspect of the present invention is the outdoor unit of a refrigeration apparatus according to any of the second through fifth aspects, wherein the first rotational speed is the minimum rotational speed at which the first outdoor fan and the second outdoor fan can be operated. Within the first control, the fan controller turns on the power supply to the second outdoor fan and then operates the second outdoor fan at the first rotational speed after the rotational speed of the second outdoor fan has reached the first rotational speed. Within the second control, the fan controller turns on the power supply to both the first outdoor fan and the second outdoor fan and then operates both the first outdoor fan and the second outdoor fan at the first rotational speed after the rotational speeds of the first outdoor fan and the second outdoor fan have both reached the first rotational speed. Within the third control, the fan controller turns on the power supply to the first outdoor fan and then operates the first outdoor fan at the first rotational speed after the rotational speed of the first outdoor fan has reached the first rotational speed.

With the outdoor unit of a refrigeration apparatus according to the sixth aspect of the present invention, within the various controls of the fan on/off control, the first outdoor fan and/or the second outdoor fan is operated at the first rotational speed, which is the minimum rotational speed at which they can be operated, after the power supply to the first outdoor fan and/or the second outdoor fan is turned on. Specifically, by performing the fan on/off control, the total blow rate of the outdoor fans can be lowered appropriately.

### <Advantageous Effects of Invention>

With the outdoor unit of a refrigeration apparatus according to the first aspect of the present invention, there is provided an outdoor unit of a refrigeration apparatus which can suppress sudden reductions in the total quantity of air passing through the outdoor heat exchanger, which is ensured by a plurality of outdoor fans, when the total blow rate of the fans is reduced.

With the outdoor unit of a refrigeration apparatus according to the second aspect of the present invention, the total blow rate of the outdoor fans can be reduced smoothly while suppressing sudden reductions in the quantity of air passed through the outdoor heat exchanger by the operating first outdoor fan.

With the outdoor unit of a refrigeration apparatus according to the third aspect of the present invention, due to the air that has flowed back through the outlet of one outdoor fan being drawn in, the total blow rate of the outdoor fans can be lowered while suppressing reductions in the quantity of air being passed through the outdoor heat exchanger by the other outdoor fan.

With the outdoor unit of a refrigeration apparatus according to the fourth aspect of the present invention, the total blow rate of the outdoor fans can be reduced.

With the outdoor unit of a refrigeration apparatus according to the fifth aspect of the present invention, the condensation capability of the outdoor heat exchanger can be regulated.

With the outdoor unit of a refrigeration apparatus according to the sixth aspect of the present invention, by performing the fan on/off control, the total blow rate of the outdoor fans can be lowered appropriately.

### BRIEF DESCRIPTION OF THE DRAWINGS

FIG. 1 is a schematic configuration view of a refrigerant circuit of an air conditioning apparatus as a refrigeration apparatus according to the present invention;
FIG. 2 is a control block diagram of a controller;
FIG. 3 is a flowchart of the air-cooling operation;
FIG. 4 is a flowchart showing the fan on/off control;
FIG. 5 is a flowchart showing the first control of the fan on/off control;
FIG. 6 is a flowchart showing the action of the first outdoor fan during the second control of the fan on/off control;
FIG. 7 is a flowchart showing the action of the second outdoor fan during the second control of the fan on/off control;
FIG. 8 is a flowchart showing the third control of the fan on/off control; and
FIG. 9 is a graph showing an example of the relationship between fan rotational speed and time of the first outdoor fan and the second outdoor fan.

### DESCRIPTION OF EMBODIMENTS

The following is a description, made with reference to the drawings, of the refrigeration apparatus according to the present invention.

### (1) Schematic configuration of air conditioning apparatus 1

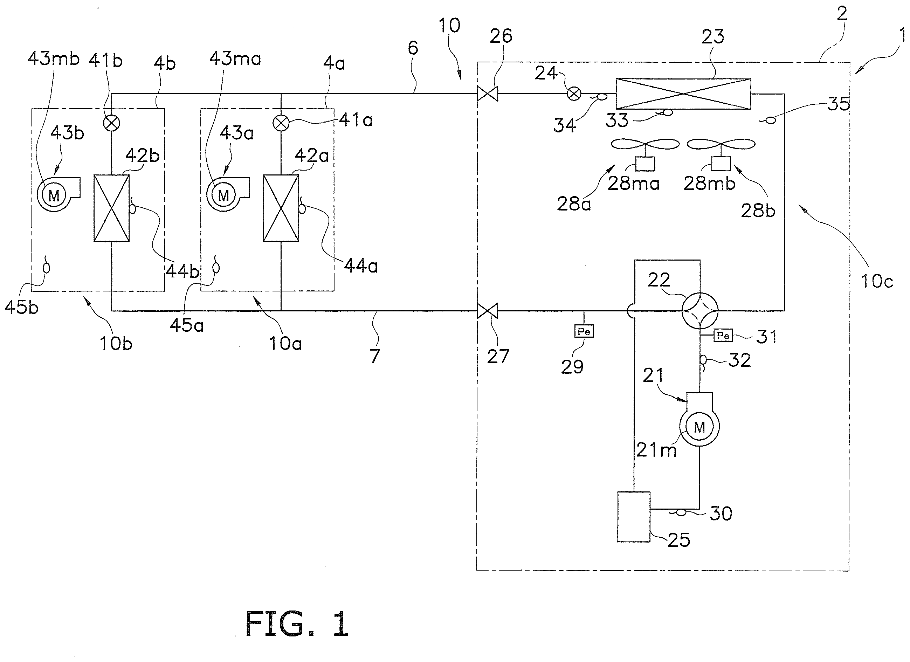

FIG. 1 is a schematic configuration view of a refrigerant circuit 10 of an air conditioning apparatus 1 as an embodiment of the refrigeration apparatus of the present invention.

The air conditioning apparatus 1 is an apparatus used to heat or cool a room in a building by performing a vapor-compression refrigeration cycle operation. The air conditioning apparatus 1 comprises primarily one outdoor unit 2, a plurality (two in the present invention) of indoor units 4a, 4b connected in parallel, and a liquid-side refrigerant communication tube 6 and a gas-side refrigerant communication tube 7 connecting the outdoor unit 2 and the indoor units 4a, 4b, as shown in FIG. 1. The vapor-compression refrigerant circuit 10 of the air conditioning apparatus 1 is configured by connecting the outdoor unit 2, the indoor units 4a, 4b, the liquid-side refrigerant communication tube 6, and the gas-side refrigerant communication tube 7.

### (1-1) Indoor units 4a, 4b

The indoor units 4a, 4b are described hereinbelow.

The indoor units 4a, 4b are installed either by being embedded in and suspended from a ceiling in a room of a building, or by being mounted to a wall in the room. The indoor units 4a, 4b are connected to the outdoor unit 2 via the liquid-side refrigerant communication tube 6 and the gas-side refrigerant communication tube 7.

Next is a description of the configuration of the indoor units 4a, 4b. Because the indoor unit 4a and the indoor unit 4b have the same configuration, only the configuration of the indoor unit 4a is described hereinbelow, while the configuration of the indoor unit 4b is not described, the reference letter "b" replacing the reference letter "a" indicating components of the indoor unit 4a.

The indoor unit 4a has primarily an indoor-side refrigerant circuit 10a (an indoor-side refrigerant circuit 10b in the indoor unit 4b) constituting part of the refrigerant circuit 10. The indoor-side refrigerant circuit 10a has primarily an indoor expansion valve 41a and an indoor heat exchanger 42a.

The indoor expansion valve 41a is an electric expansion valve connected to the liquid side of the indoor heat exchanger 42a in order to depressurize, regulate the flow rate of, and/or otherwise manipulate the refrigerant flowing through the indoor-side refrigerant circuit 10a.

The indoor heat exchanger 42a is a cross fin-type fin-and-tube heat exchanger configured from a heat transfer tube and numerous fins. The indoor heat exchanger 42a functions as an evaporator of refrigerant and cools indoor air during the air-cooling operation of the air conditioning apparatus 1. The indoor heat exchanger 42a also functions as a condenser of refrigerant and heats indoor air during the air-warming operation of the air conditioning apparatus 1.

The indoor unit 4a has an indoor fan 43a. The indoor fan 43a functions as an airblowing fan for drawing indoor air into the indoor unit 4a, and supplying the air into the room as supplied air after the air has undergone heat exchange with the refrigerant in the indoor heat exchanger 42a. The indoor fan 43a is driven by an indoor fan motor 43ma, and is a fan capable of varying the blow rate of air supplied to the indoor heat exchanger 42a.

The indoor unit 4a is provided with various sensors. Specifically, the indoor unit 4a is provided with an indoor heat exchange temperature sensor 44a for detecting the temperature of refrigerant flowing through the indoor heat exchanger 42a (the evaporation temperature Te during the air-cooling operation), and an indoor temperature sensor 45a for detecting the temperature of indoor air flowing into the indoor unit 4a (i.e., the indoor temperature).

### (1-2) Configuration of outdoor unit 2

The configuration of the outdoor unit 2 is described hereinbelow.

The outdoor unit 2 is installed outdoors of the building, and is connected to the indoor units 4a, 4b via the liquid-side refrigerant communication tube 6 and the gas-side refrigerant communication tube 7.

The outdoor unit 2 has an outdoor-side refrigerant circuit 10c constituting part of the refrigerant circuit 10. The outdoor-side refrigerant circuit 10c has primarily a compressor 21, a four-way switching valve 22, an outdoor heat exchanger 23, an outdoor expansion valve 24, an accumulator 25, a liquid-side shutoff valve 26, and a gas-side shutoff valve 27.

The compressor 21 compresses refrigerant. The compressor 21 is a scroll compressor capable of varying operation capacity, and is driven by a compressor motor 21m.

The four-way switching valve 22, which is a valve as a switching mechanism for switching the direction of refrigerant flow, can adopt a first state (refer to the solid lines of the four-way switching valve 22 in FIG. 1) and a second state (refer to the dashed lines of the four-way switching valve 22 in FIG. 1).

In the first state, the discharge side of the compressor 21 and the gas side of the outdoor heat exchanger 23 are connected, and the intake side of the compressor 21 and the gas sides of the indoor heat exchangers 42a, 42b are connected. Specifically, when the four-way switching valve 22 adopts the first state, the refrigerant circuit 10 is in the air-cooling operation state. In the second state, the discharge side of the compressor 21 and the gas sides of the indoor heat exchangers 42a, 42b (specifically, the gas-side refrigerant communication tube 7) are connected, and the intake side of the compressor 21 (specifically, the accumulator 25) and the gas side of the outdoor heat exchanger 23 are connected. Specifically, when the four-way switching valve 22 adopts the second state, the refrigerant circuit 10 is in the air-warming operation state.

The outdoor heat exchanger 23 is a cross fin-type fin-and-tube heat exchanger configured from a heat transfer tube and numerous fins. The gas side of the outdoor heat exchanger 23 is connected to the four-way switching valve 22, and the liquid side is connected to the liquid-side refrigerant communication tube 6. The outdoor heat exchanger 23 functions as a condenser of refrigerant during the air-cooling operation and functions as an evaporator of refrigerant during the air-warming operation.

The outdoor expansion valve 24 is an expansion mechanism, and is an electric expansion valve connected to the liquid side of the outdoor heat exchanger 23 in order to regulate the pressure and/or flow rate of the refrigerant flowing through the outdoor-side refrigerant circuit 10c.

The accumulator 25 is connected between the compressor 21 and the four-way switching valve 22, and is a container capable of retaining surplus refrigerant created in the refrigerant circuit 10 in accordance with the operating load of the indoor units 4a, 4b.

The liquid-side shutoff valve 26 and the gas-side shutoff valve 27 are valves provided to ports connecting with external devices or tubes (specifically, the liquid-side refrigerant communication tube 6 and the gas-side refrigerant communication tube 7). The liquid-side shutoff valve 26 is connected to the outdoor heat exchanger 23. The gas-side shutoff valve 27 is connected to the four-way switching valve 22.

The outdoor unit 2 has a first outdoor fan 28a and a second outdoor fan 28b. The first outdoor fan 28a and the second outdoor fan 28b draw outdoor air into the outdoor unit 2 and then discharge the air out of the room after the air has exchanged heat with the refrigerant in the outdoor heat exchanger 23. Specifically, the first outdoor fan 28a and the second outdoor fan 28b generate an air flow passing through the outdoor heat exchanger 23. The first outdoor fan 28a and the second outdoor fan 28b are fans capable of varying the quantity of outside air supplied to the outdoor heat exchanger 23, and are also propeller fans driven by a first outdoor fan motor 28ma and a second outdoor fan motor 28mb, respectively.

The outdoor unit 2 is provided with various sensors 29-35. Specifically, the outdoor unit 2 is provided with an intake pressure sensor 29 for detecting the intake pressure P1 of refrigerant drawn into the compressor 21, an intake temperature sensor 30 for detecting the intake temperature of refrigerant drawn into the compressor 21, a discharge pressure sensor 31 for detecting the discharge pressure P2 of refrigerant discharged from the compressor 21, a discharge temperature sensor 32 for detecting the discharge temperature of refrigerant, an outdoor heat exchange temperature sensor 33 for detecting the temperature of refrigerant flowing through the outdoor heat exchanger 23 (the condensation temperature Tc during the air-cooling operation), a liquid-side temperature sensor 34 for detecting the temperature of refrigerant in the liquid side of the outdoor heat exchanger 23, and an outside air temperature sensor 35 for detecting the temperature of outside air, which is air in the exterior where the outdoor unit 2 is installed.

As described above, the refrigerant circuit 10 of the air conditioning apparatus 1 is configured by the indoor-side refrigerant circuits 10a, 10b and the outdoor-side refrigerant circuit 10c being connected by the liquid-side refrigerant communication tube 6 and the gas-side refrigerant communication tube 7.

### (2) Configuration of control unit 9

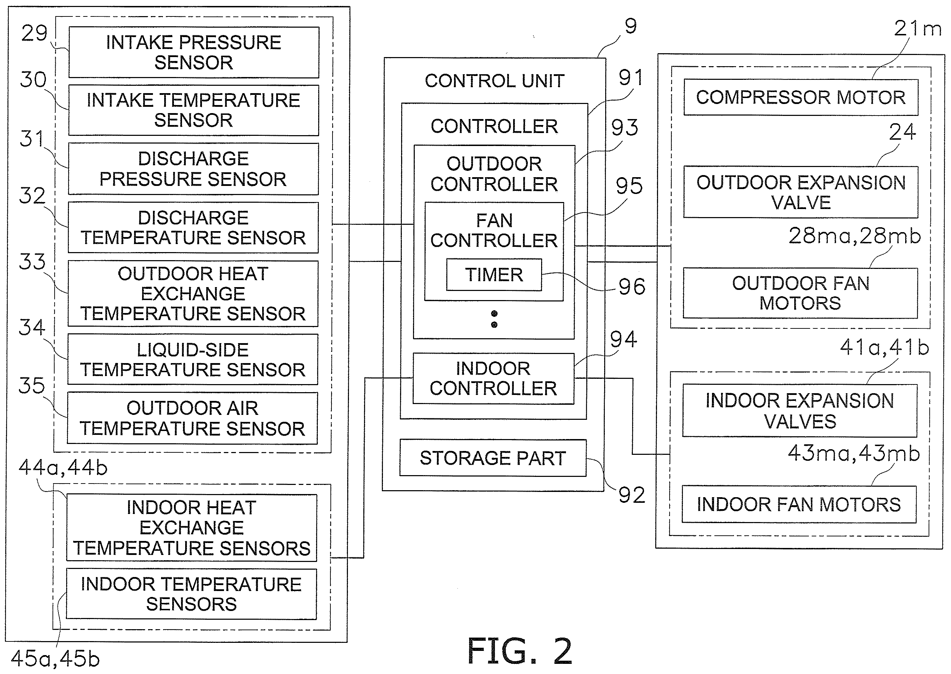

FIG. 2 is a control block diagram of a control unit 9.

The control unit 9 has a controller 91 and a storage part 92 as shown in FIG. 2.

The controller 91, which is configured from a microcomputer or the like, has an outdoor controller 93 and an indoor controller 94.

The outdoor controller 93 controls the actions of the various devices constituting the outdoor unit 2 by exchanging control signals with the indoor controller 94. Specifically, the outdoor controller 93 controls the rotational speed of the compressor motor 21m for driving the compressor 21, the opening degree of the outdoor expansion valve 24, the rotational speeds of the first outdoor fan motor 28ma and the second outdoor fan motor 28mb for driving the first outdoor fan 28a and the second outdoor fan 28b, and other actions. The outdoor controller 93 is connected with the various sensors 29-35.

The outdoor controller 93 has a fan controller 95. Control of the rotational speeds of the above-described first outdoor fan motor 28ma and second outdoor fan motor 28mb is performed by the fan controller 95. Specifically, the fan controller 95 controls the first outdoor fan 28a and the second outdoor fan 28b (specifically, the first outdoor fan motor 28ma and the second outdoor fan motor 28mb) by turning the power supply to the first outdoor fan 28a and the second outdoor fan 28b on and off. More specifically, the fan controller 95 applies voltage to the first outdoor fan motor 28ma and the second outdoor fan motor 28mb to supply electric current to the first outdoor fan motor 28ma and the second outdoor fan motor 28mb, thereby turning on the power supply to the first outdoor fan motor 28ma and the second outdoor fan motor 28mb.

The fan controller 95 also has a timer 96. The timer 96 measures various times.

The indoor controller 94 controls the actions of the various devices constituting the indoor units 4a, 4b by exchanging control signals with the outdoor controller 93 and/or a remote controller (not shown) for operating the indoor units 4a, 4b. Specifically, the indoor controller 94 controls the rotational speeds of the indoor fan motors 43ma, 43mb for driving the indoor fans 43a, 43b, the opening degrees of the indoor expansion valves 41a, 41b, and other actions. The indoor controller 94 is connected with the various sensors 44a, 44b, 45a, and 45b.

The storage part 92 is composed of RAM, ROM, and/or other memory. The storage part 92 stores thresholds and the like used in hereinafter-described fan on/off control and other operations.

### (3) Actions of the air conditioning apparatus 1

The actions of the air conditioning apparatus 1 are described hereinbelow. The following actions are performed by the controller 91.

The actions of the air conditioning apparatus 1 are primarily the air-cooling operation and the air-warming operation, wherein the outdoor unit 2 and the indoor units 4a, 4b are activated in accordance with the air-conditioning load of the room (specifically, a load such as is based on the loads of the indoor units 4a, 4b, e.g. the difference between the set temperature and the indoor temperature). The operation of the air conditioning apparatus 1 is described in a simple manner hereinbelow.

### (3-1) Air-warming operation

First, the action of the air conditioning apparatus 1 during the air-warming operation will be described using FIG. 1.

During the air-warming operation, the four-way switching valve 22 adopts the second state. Specifically, this is a state in which the discharge side of the compressor 21 is connected to the gas sides of the indoor heat exchangers 42a, 42b, and the intake side of the compressor 21 is connected to the gas side of the outdoor heat exchanger 23. In this state, when the indoor fans 43a, 43b, the compressor 21, the first outdoor fan 28a, and the second outdoor fan 28b are started, low-pressure gas refrigerant is drawn into the compressor 21 and compressed to become high-pressure gas refrigerant, which is then passed through the four-way switching valve 22, the gas-side shutoff valve 27, and the gas-side refrigerant communication tube 7 and sent to the indoor units 4a, 4b. The high-pressure gas refrigerant sent to the indoor units 4a, 4b is subjected to heat exchange with the indoor air in the indoor heat exchangers 42a, 42b, and compressed into a high-pressure liquid refrigerant. When the high-pressure liquid refrigerant passes through the indoor expansion valves 41a, 41b, the refrigerant is depressurized in accordance with the opening degrees of the indoor expansion valves 41a, 41b. The refrigerant that has passed through the indoor expansion valves 41a, 41b is sent to the outdoor unit 2 via the liquid-side refrigerant communication tube 6. The refrigerant sent to the outdoor unit 2 is passed through the liquid-side shutoff valve 26 and further depressurized by the outdoor expansion valve 24, after which the refrigerant flows into the outdoor heat exchanger 23. The low-pressure gas-liquid two-phase refrigerant that has flowed into the outdoor heat exchanger 23 exchanges heat with the outdoor air supplied by the first outdoor fan 28a and the second outdoor fan 28b. At this time, the low-pressure gas-liquid two-phase refrigerant is evaporated into low-pressure gas refrigerant. The low-pressure gas refrigerant flows into the accumulator 25 via the four-way switching valve 22. The low-pressure gas refrigerant that has flowed into the accumulator 25 is again drawn into the compressor 21.

### (3-2) Air-cooling operation

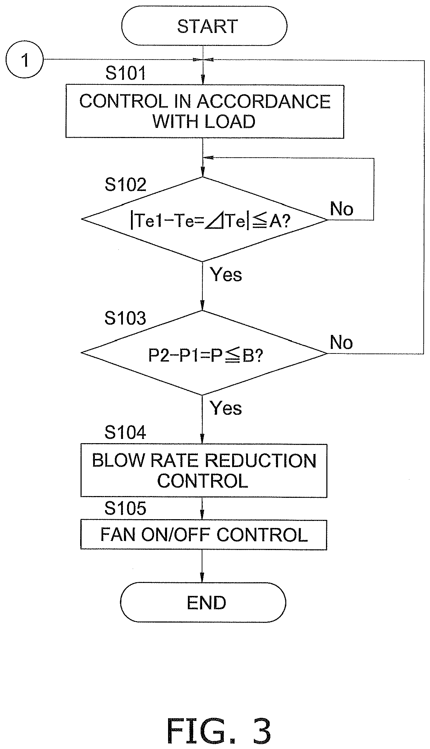

FIG. 3 is a flowchart of the air-cooling operation.

Next, the actions of the air conditioning apparatus 1 during the air-cooling operation are described using FIGS. 1 and 3.

When the air-cooling operation is performed at times of low outside air, there are cases in which the condensation capability of the outdoor heat exchanger 23 increases, and it becomes difficult for the difference between the pressure in the discharge side of the compressor 21 and the pressure in the intake side of the compressor 21 (high-low differential pressure) to be maintained at a predetermined value or above. When it is difficult to maintain the high-low differential pressure of the compressor 21, there is a concern that it may be a problem to ensure reliability of the compressor 21.

In view of this, during the air-cooling operation in the air conditioning apparatus 1 as shown in FIG. 3, a determination is made as to whether or not the pressure P obtained by subtracting the intake pressure P1 of the refrigerant from the discharge pressure P2 of the refrigerant (i.e., the high-low differential pressure P) is equal to or less than a threshold B (P ≤ B) (step S103). Specifically, first, the outdoor unit 2 and the indoor units 4a, 4b are controlled (normal control) in accordance with the load of the indoor units 4a, 4b (step S101). Next, to confirm whether or not the temperature of the refrigerant (i.e. the evaporation temperature Te) flowing through the indoor heat exchangers 42a, 42b functioning as evaporators during the air-cooling operation has stabilized, a determination is made as to whether or not the absolute value of a value ΔTe obtained by subtracting the evaporation temperature Te from a target evaporation temperature Te1 is equal to or less than a threshold A (|ΔTe| ≤ A) (step S102). The evaporation temperature Te is detected by the indoor heat exchange temperature sensors 44a, 44b as described above. The term "stabilize" means that there ceases to be deviation in the changes in the numerical values. When the absolute value of the value ΔTe is determined to be equal to or less than the threshold A (|ΔTe| ≤ A), a determination is made in step S103 as to whether or not the high-low differential pressure P is equal to or less than the threshold B (P ≤ B). When the absolute value of the value ΔTe is determined to not be equal to or less than threshold A (|ΔTe| ≤ A), step S102 is repeated.

When it is determined in step S103 that the high-low differential pressure P is equal to or less than the threshold B (P ≤ B), blow rate reduction control (step S104), described hereinafter, is performed. When it is determined that the high-low differential pressure P is not equal to or less than the threshold B (P > B), step S101 is resumed and the outdoor unit 2 and the indoor units 4a, 4b are controlled in accordance with the load of the indoor units 4a, 4b.

The actions of the air conditioning apparatus 1 during the air-cooling operation are described in a simple manner hereinbelow using FIG. 1.

During the air-cooling operation, the four-way switching valve 22 adopts the first state. Specifically, this is a state in which the discharge side of the compressor 21 is connected to the gas side of the outdoor heat exchanger 23, and the intake side of the compressor 21 is connected to the gas sides of the indoor heat exchangers 42a, 42b. In this state, when the indoor fans 43a, 43b, the compressor 21, the first outdoor fan 28a, and the second outdoor fan 28b are started, low-pressure gas refrigerant is drawn into the compressor 21 and compressed into high-pressure gas refrigerant. The high-pressure gas refrigerant is sent through the four-way switching valve 22 to the outdoor heat exchanger 23, and subjected to heat exchange with the outdoor air supplied by the first outdoor fan 28a and the second outdoor fan 28b. At this time, the high-pressure gas refrigerant is condensed by heat exchange with the outdoor air to become high-pressure liquid refrigerant. After passing through the outdoor expansion valve 24 (the outdoor expansion valve 24 is fully open at this time), the high-pressure liquid refrigerant is sent through the liquid-side shutoff valve 26 and the liquid-side refrigerant communication tube 6 to the indoor units 4a, 4b. The high-pressure liquid refrigerant sent to the indoor units 4a, 4b is depressurized when passing through the indoor expansion valves 41a, 41b and sent to the indoor heat exchangers 42a, 42b. The low-pressure gas-liquid two-phase refrigerant sent to the indoor heat exchangers 42a, 42b is evaporated into low-pressure gas refrigerant by heat exchange with the indoor air. The low-pressure gas refrigerant is sent through the gas-side refrigerant communication tube 7 to the outdoor unit 2, and the refrigerant then flows through the gas-side shutoff valve 27 and the four-way switching valve 22 into the accumulator 25. The low-pressure gas refrigerant that has flowed into the accumulator 25 is drawn again into the compressor 21.

### (3-3) Blow rate reduction control

The blow rate reduction control is a control for reducing the total fan blow rate (airblowing rate) of the first outdoor fan 28a and the second outdoor fan 28b. As described above, because of the concern that there will be a problem with the reliability of the compressor 21 when the high-low differential pressure P cannot be ensured, the blow rate reduction control is performed when the high-low differential pressure P is equal to or less than the threshold B, in order to repress the condensation capability of the outdoor heat exchanger 23. Specifically, the blow rate reduction control is performed during low blow rate demand in which a low blow rate is desired.

The blow rate reduction control by the controller 91 (specifically, the fan controller 95) is described in a simple manner hereinbelow.

In the blow rate reduction control, first a transition is made from the first operating state, in which the first outdoor fan 28a and the second outdoor fan 28b are operating, to the second operating state, in which the operation of the first outdoor fan 28a is continued and the power supply to the second outdoor fan 28b is turned off. The term "operation of the outdoor fans 28a, 28b" herein refers to a state in which the power supply to the outdoor fans 28a, 28b is on and the outdoor fans 28a, 28b are rotating at a predetermined rotational speed.

When a transition is made from the first operating state to the second operating state, the power supply to the second outdoor fan is turned off, the fan rotational speed approaches zero after some time has passed, and it is assumed that the still operating first outdoor fan drawn in air from the outlet of the second outdoor fan. Therefore, it is assumed that the quantity of air passing through the outdoor heat exchanger, which is ensured by the operating first outdoor fan, decreases (specifically, there is a reduction of the quantity of air drawn in through normal inlet of the operating first outdoor fan). Specifically, it is assumed that the total quantity of air passing through the outdoor heat exchanger, which is ensured by the first outdoor fan and the second outdoor fan, suddenly decreases.

In view of this, after a transition is made from the first operating state to the second operating state during blow rate reduction control in the air conditioning apparatus 1, fan on/off control for turning the power supply to the first outdoor fan 28a and the second outdoor fan 28b on and off is performed as control for reducing the fan blow rate as a continuation of the blow rate reduction control (step S105). Specifically, after the transition is made from the first operating state to the second operating state during the blow rate reduction control, the fan controller 95 performs (initiates) the fan on/off control on the basis of the timer 96. More specifically, during the second operating state in the air conditioning apparatus 1, provided in advance as a first threshold is the time that is assumed to be when the total air quantity passing through the outdoor heat exchanger 23 ensured by the outdoor fans 28a, 28b suddenly decreases. The timer 96 then measures a predetermined time from the transition of the first outdoor fan 28a and the second outdoor fan 28b to the second operating state, and before the predetermined time passes the first threshold, the fan controller 95 initiates the fan on/off control. The first threshold is stored in the storage part 92.

The fan on/off control by the controller 91 (specifically, the fan controller 95) is described in detail hereinbelow.

### (3-4) Fan on/off control

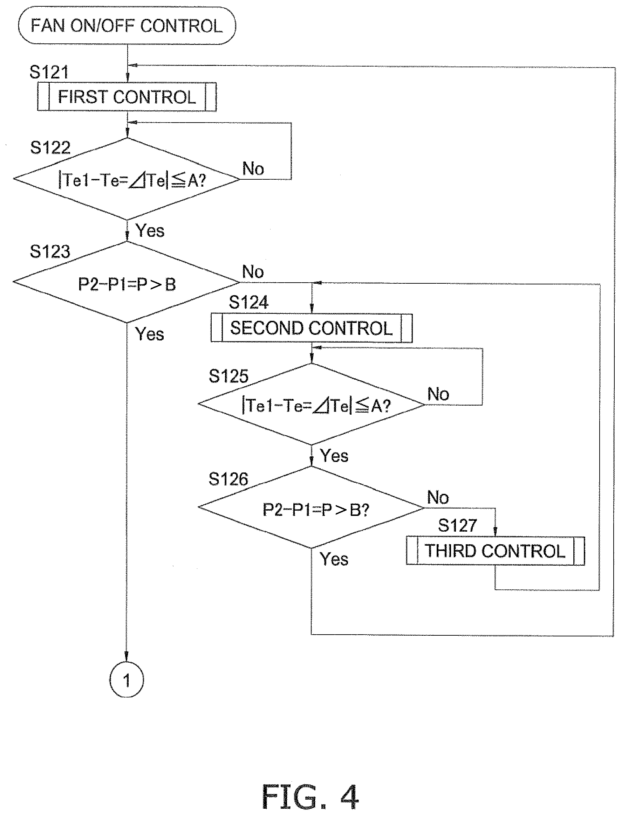

FIG. 4 is a flowchart showing the fan on/off control.

In step S121, a first control is performed. The first control is described hereinafter.

In step S122, a determination is made as to whether or not the absolute value of the value ΔTe obtained by subtracting the evaporation temperature Te from the target evaporation temperature Te1 is equal to or less than the threshold A (|ΔTe| ≤ A). When it is determined that |ΔTe| is equal to or less than A, the sequence transitions to step S123, and when it is determined that |ΔTe| is not equal to or less than A, step S122 is repeated.

In step S123, a determination is made as to whether or not P > B. When it is determined that P is greater than B, step S101 shown in FIG. 3 is resumed, and control is performed according to the load of the indoor units 4a, 4b. When it is determined that P is not greater than B, the sequence transitions to step S124 and the second control is performed. The second control is described hereinafter.

In step S125, a determination is made as to whether or not |ΔTe| ≤ A. When it is determined that |ΔTe| is equal to or less than A, the sequence transitions to step S126, and when it is determined that |ΔTe| is not equal to or less than A, step S125 is repeated.

In step S126, a determination is made as to whether or not P > B. When it is determined that P is greater than B, step S124 is resumed and the second control is performed. When it is determined that P is not greater than B, the sequence transitions to step S127 and the third control is performed. The third control is described hereinafter.

In the fan on/off control as described above, first, the first control is performed, and when the high-low differential pressure P is determined to not be greater than the threshold B, the second control is performed. When the high-low differential pressure P does not become greater than the threshold B (when the high-low differential pressure P is determined to not be greater than the threshold B) despite the second control being performed, the third control is performed.

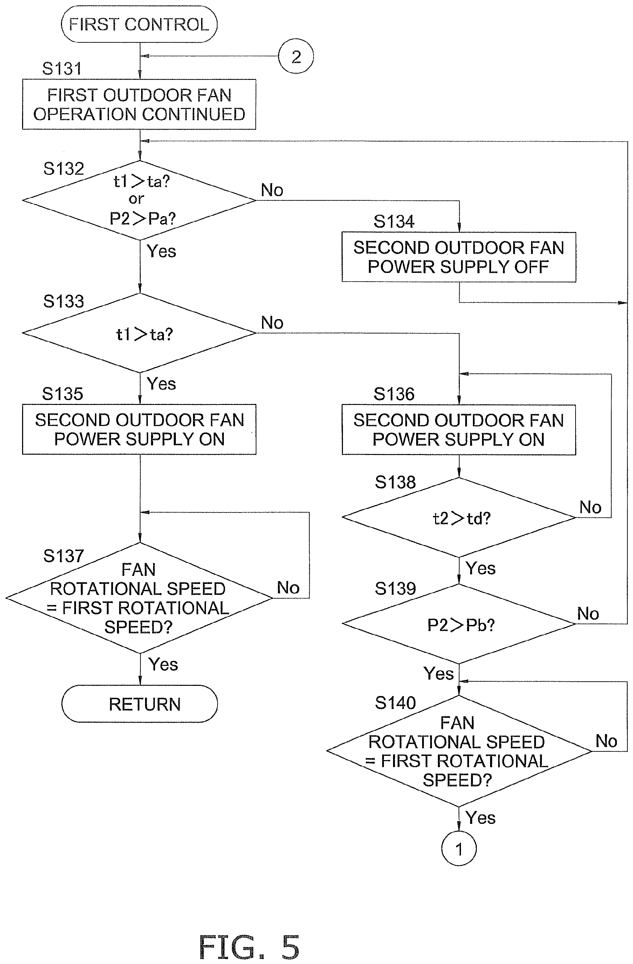

The various controls (first control to third control) are described hereinbelow using FIGS. 5 to 9.

During the first control to the third control, the power supply to the first outdoor fan 28a and the second outdoor fan 28b is turned on, and after the fan rotational speeds of the first outdoor fan 28a and the second outdoor fan 28b have reached the first rotational speed, the first outdoor fan 28a and the second outdoor fan 28b are presumed to be operated at the first rotational speed.

### (3-4-1) First control

FIG. 5 is a flowchart showing the first control of the fan on/off control. The first control is described hereinbelow using FIG. 5.
In step S131, the power supply to the first outdoor fan 28a continues to be on. At this time, the first outdoor fan 28a is operated at the first rotational speed (e.g. 350 rpm), which is the minimum rotational speed at which the first outdoor fan 28a and/or the second outdoor fan 28b can be operated.

In step S132, a determination is made as to whether or not either of the following conditions are met: that a first time t1, which is the elapsed time after the power supply to the second outdoor fan 28b has been turned off, has exceeded a threshold ta (t1 > ta); and that the discharge pressure P2 of the compressor 21, which is the operating state amount equivalent to the condensation pressure Pc in the outdoor heat exchanger 23, has exceeded a threshold Pa (P2 > Pa). When it is determined that either one of these conditions has been met, the sequence transitions to step S133, and when it is determined that neither of these conditions has been met, the sequence transitions to step S134. The first time t1 is measured by the timer 96.

In step S133, a determination is made as to whether or not the first time t1 has exceeded the threshold ta (t1 > ta). When it is determined that the first time t1 has exceeded the threshold ta (t1 > ta), the sequence transitions to step S135, and when it is determined that the first time t1 does not exceed the threshold ta (t1 > ta), the sequence transitions to step S136.

In step S134, either the power supply to the second outdoor fan 28b is turned off, or the power supply to the second outdoor fan 28b is kept off. Step S132 is then resumed.

In steps S135 and S136, either the power supply to the second outdoor fan 28b is turned on, or the power supply to the second outdoor fan 28b is kept on.

In step S137, a determination is made as to whether or not the fan rotational speed of the second outdoor fan 28b has reached the first rotational speed. When it is determined to have done so, the first control is ended, and when it is determined to have not, the determination of step S137 is repeated.

In step S138, a determination is made as to whether or not a second time t2, which is the elapsed time after the power supply to the second outdoor fan 28b has been turned on, has exceeded a threshold td (t2 > td). When it is determined that the threshold is exceeded, the sequence transitions to step S139. When it is determined that the threshold is not exceeded, step S136 is resumed. The second time t2 is measured by the timer 96.

In step as 139, a determination is made as to whether or not the discharge pressure P2 has exceeded (P2 > Pb) a threshold Pb (Pb > Pa). When it is determined that the threshold is exceeded, step S101 shown in FIG. 3 is resumed, and normal control is performed. Because a high pressure (i.e. the discharge pressure P2) can ensure the target pressure Pb, the process is configured to resume normal control in order to raise the total fan rotational speed of the first outdoor fan 28a and the second outdoor fan 28b. When it is determined that the threshold is not exceeded, the process beginning with step S132 is performed.

In step S140, a determination is made as to whether or not the fan rotational speed of the second outdoor fan 28b has reached the first rotational speed. When it is determined to have done so, the first control is ended, and when it is determined to have not, the determination of step S140 is repeated.

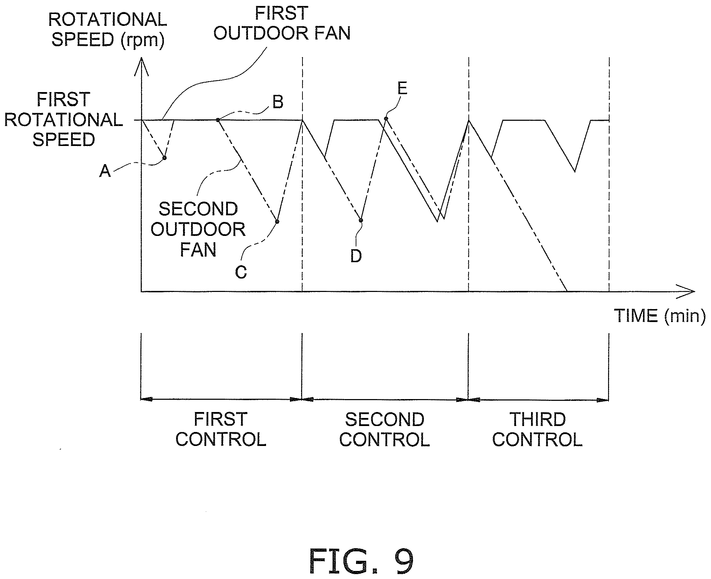

FIG. 9 is used to give a simple description of an example of the fluctuation in fan rotational speed that occurs over time in the first outdoor fan 28a and the second outdoor fan 28b during the first control.

FIG. 9 is a graph showing an example of the relationship between time (min) and the fan rotational speeds (rpm) of the first outdoor fan 28a and the second outdoor fan 28b. The graph shown in solid lines indicates the fan rotational speed of the first outdoor fan 28a, and the graph shown in double-dashed lines indicates the fan rotational speed of the second outdoor fan 28b.

First, before the transition to the first control, because the first outdoor fan 28a and the second outdoor fan 28b are in the second operating state, the second outdoor fan 28b is in a state in which the power supply is turned off. Consequently, the second outdoor fan 28b is in a state of reduced fan rotational speed when the transition is made to the first control.

When the discharge pressure P2 exceeds the threshold Pa (A shown in FIG. 9), the power supply to the second outdoor fan 28b is turned on, and the fan rotational speed of the second outdoor fan 28b increases. When the fan rotational speed of the second outdoor fan 28b reaches the first rotational speed, the fan rotational speed of the second outdoor fan 28b is kept at the first rotational speed. When the discharge pressure P2 falls to the threshold Pa or below (B shown in FIG. 9), the power supply to the second outdoor fan 28b is turned off, and the fan rotational speed therefore decreases.

When the first time t1 exceeds the threshold ta without the discharge pressure P2 exceeding the threshold Pa (C shown in FIG. 9), the power supply to the second outdoor fan 28b is turned on. Consequently, the fan rotational speed of the second outdoor fan 28b increases.

When the first time t1 exceeds the threshold ta, the first control is ended by the fan rotational speed of the second outdoor fan 28b reaching the first rotational speed. After the power supply to the second outdoor fan 28b has been turned on, the first control is ended by the fan rotational speed of the second outdoor fan 28b reaching the first rotational speed both when the second time t2 exceeds the threshold td and when the discharge pressure P2 exceeds the threshold Pb.

During the first control, the fan rotational speed of the first outdoor fan 28a is constant because the first outdoor fan is operated at the first rotational speed as described above.

As described above, after the transition to the second operating state, during the fan on/off control, the first control is performed in which the first outdoor fan 28a is operated at the first rotational speed and the power supply to the second outdoor fan 28b is turned on and off.

As described above, during the first control, the power supply to the second outdoor fan 28b is turned on and off based on the discharge pressure P2 (the condensation pressure Pc) and/or the first time t1 which is the elapsed time after the power supply to the second outdoor fan 28b is turned off.

### (3-4-2) Second control

### (3-4-2-1) Control of first outdoor fan 28a in second control

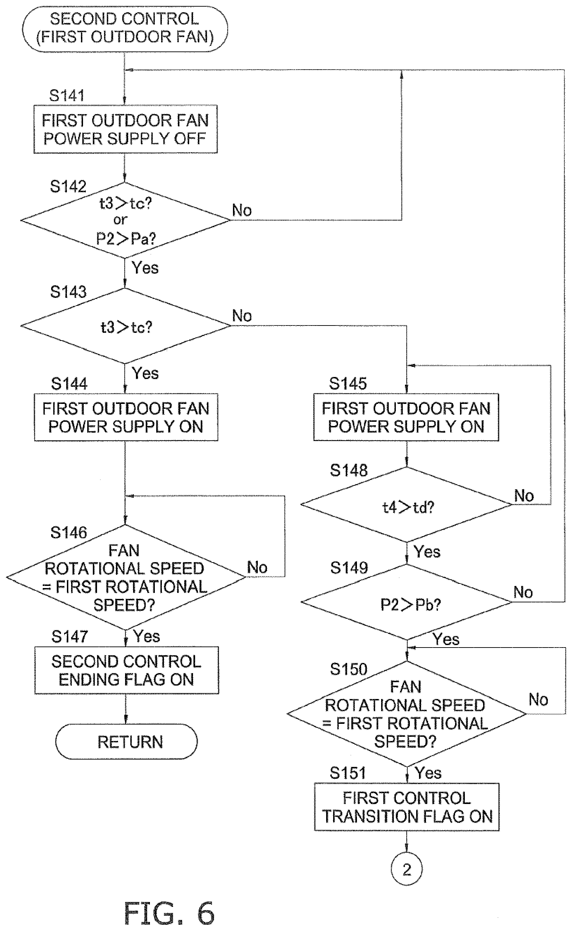

FIG. 6 is a flowchart showing the action of the first outdoor fan 28a during the second control of the fan on/off control. The action of the first outdoor fan 28a during the second control is described hereinbelow using FIG. 6.

In step S141, either the power supply to the first outdoor fan 28a is turned off or the power supply to the first outdoor fan 28a is kept off.

In step S142, a determination is made as to whether or not either of the following conditions are met: that a third time t3, which is the elapsed time after the power supply to the first outdoor fan 28a has been turned off, has exceeded a threshold tc (t3 > tc); and that the condensation pressure Pc has exceeded a threshold Pa (Pc > Pa). When it is determined that either one of these conditions has been met, the sequence transitions to step S143, and when it is determined that neither of these conditions has been met, step S141 is resumed.

In step S143, a determination is made as to whether or not the third time t3 has exceeded the threshold tc (t3 > tc). When it is determined to have exceeded the threshold, the sequence transitions to step S144. When it is determined to have not exceeded the threshold, the sequence transitions to step S145.

In step S144, the power supply to the first outdoor fan 28a is turned on.

In step S145, either the power supply to the first outdoor fan 28a is turned on, or the power supply to the first outdoor fan 28a is kept on.

In step S146, a determination is made as to whether or not the fan rotational speed of the first outdoor fan 28a has reached the first rotational speed. When it is determined to have done so, the sequence transitions to step S147. When it is determined to have not, the determination of step S146 is repeated.

In step S147, a second control ending flag for ending the second control is turned on. The second control is thereby ended.

In step S148, a determination is made as to whether or not a fourth time t4, which is the elapsed time after the power supply to the first outdoor fan 28a has been turned on, exceeds a threshold td (t4 > td). When it is determined to have exceeded the threshold, the sequence transitions to step S149, and when it is determined to have not exceeded the threshold, the sequence transitions to step S141.

In step S149, a determination is made as to whether or not the discharge pressure P2 has exceeded the threshold Pb (P2 > Pb). When it is determined to have exceeded the threshold, the sequence transitions to step S150. When it is determined to have not exceeded the threshold, the process starting with step S141 is performed.

In step S150, a determination is made as to whether or not the fan rotational speed of the first outdoor fan 28a has exceeded the first rotational speed. When it is determined to have done so, the second control is ended, and when it is determined to have not, the determination of step S150 is repeated.

In step S151, a first control transition flag for transitioning to the first control is turned on. The sequence thereby transitions to the first control. Because the high pressure (specifically, the discharge pressure P2) herein can ensure the target pressure Pb, the process is configured to return to the first control in order to raise the total fan rotational speed of the first outdoor fan 28a and the second outdoor fan 28b.

The first outdoor fan 28a during the second control, similar to the second outdoor fan 28b during the first control, has the power supply turned on and off based on the discharge pressure P2 (the condensation pressure Pc). A description of the transition of the fan rotational speed of the first outdoor fan 28a during the second control is therefore omitted.

### (3-4-2-2) Control of second outdoor fan 28b during second control

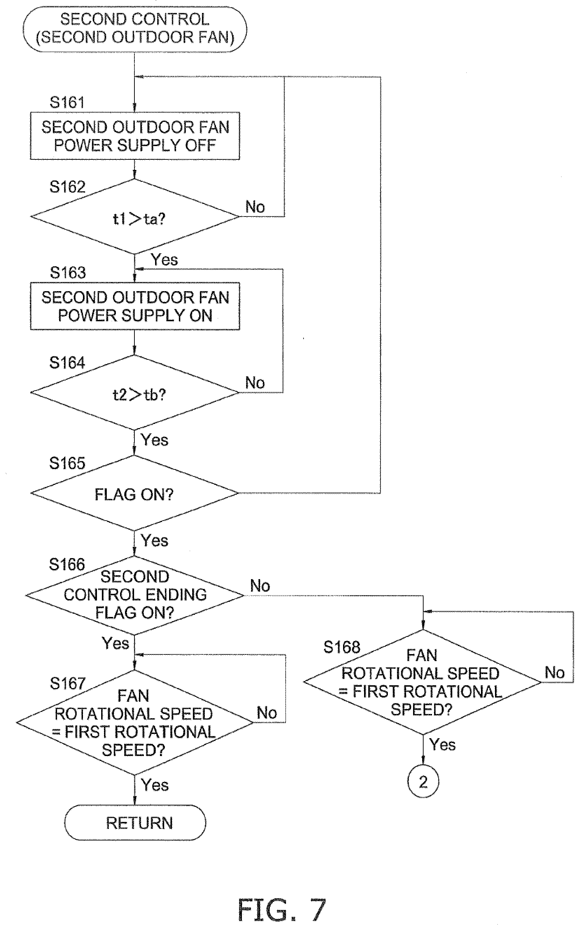

FIG. 7 is a flowchart showing the action of the second outdoor fan 28b during the second control of the fan on/off control. The action of the second outdoor fan 28b during the second control is described hereinbelow using FIG. 7.

In step S161, either the power supply to the second outdoor fan 28b is turned off, or the power supply to the second outdoor fan 28b is kept off.

In step S162, a determination is made as to whether or not the first time t1 has exceeded the threshold ta. When it is determined to have exceeded the threshold, the sequence transitions to step S163. When it is determined to have not exceeded the threshold, step S161 is resumed.

In step S163, either the power supply to the second outdoor fan 28b is turned on, or the power supply to the second outdoor fan 28b is kept on.

In step S164, a determination is made as to whether or not the second time t2 has exceeded the threshold tb (t2 > tb). When it is determined to have exceeded the threshold, the sequence transitions to step S165. When it is determined to have not exceeded the threshold, step S163 is resumed.

In step S165, a determination is made as to whether or not the flag is on. When it is determined to be on, the sequence transitions to step S166, and when it is determined to not be on, step S161 is resumed.

In step S166, a determination is made as to whether or not the second control ending flag is on. When it is determined to be on, the sequence transitions to step S167, and when it is determined to not be on, step S168 is resumed.

In step S167, a determination is made as to whether or not the fan rotational speed has reached the first rotational speed. When it is determined to have done so, the second control is ended. When it is determined to have not, the process of step S 167 is repeated.

In step S168, determination is made as to whether or not the fan rotational speed of the second outdoor fan 28b has reached the first rotational speed. When it is determined to have done so, the sequence transitions to the first control. When it is determined to have not, the process of step S168 is repeated.

FIG. 9 will be used here to give a simple description of an example of the fluctuation in fan rotational speed that occurs over time in the second outdoor fan 28b during the second control.

In the second control as shown in FIG. 9, first, the fan rotational speed falls because the power supply to the second outdoor fan 28b is turned off. The power supply to the second outdoor fan 28b is then turned on when the first time t1 exceeds the threshold ta (D shown in FIG. 9), and the fan rotational speed rises. The power supply to the second outdoor fan 28b is then turned off and the fan rotational speed falls when the second time t2 exceeds the threshold tb (E shown in FIG. 9). The fan rotational speed thereafter continues to transition in a similar manner until the second control flag or the first control transition flag is turned on.

During the fan on/off control as described above, after the first control has been performed, the second control is performed in which, based on predetermined conditions, the power supply to the first outdoor fan 28a is turned on and off and the power supply to the second outdoor fan 28b is turned on and off.

Specifically, during the second control, the power supply to the first outdoor fan 28a is turned on and off based on the discharge pressure P2 (the condensation pressure Pc) and/or the third time t3, which is the elapsed time starting when the power supply to the first outdoor fan 28a is turned off. The process of the second control is configured so that after the power supply to the second outdoor fan 28b has been turned off, the second outdoor fan remains stopped until the threshold ta is exceeded, and also so that after the power supply to the second outdoor fan 28b has been turned on, the second outdoor fan is operated until the threshold tb is exceeded. Specifically, the second outdoor fan 28b is turned on and off in predetermined cycles (the stopping time is at ta and the operating time is at tb).

### (3-4-3) Third control

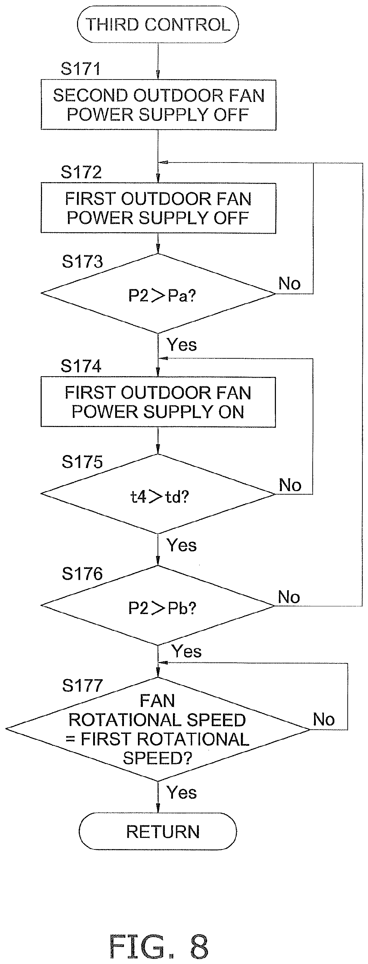

FIG. 8 is a flowchart showing the third control of the fan on/off control. The third control is described hereinbelow using FIG. 8.

In step S171, the power supply to the second outdoor fan 28b is turned off. During the third control, after the power supply to the second outdoor fan 28b is not turned on after having been turned off. Specifically, after the power supply to the second outdoor fan 28b is turned off in this step, the second outdoor fan 28b remains in a non-rotating state, i.e. in a completely stopped state.

In step S172, the power supply to the first outdoor fan 28a is turned off.

In step S173, a determination is made as to whether or not the discharge pressure P2 has exceeded the threshold Pa. When it is determined to have exceeded the threshold, the sequence transitions to step S174. When it is determined to have not exceeded the threshold, step S172 is resumed, and the power supply to the first outdoor fan 28a continues to be off.

In step S174, the power supply to the first outdoor fan 28a is turned on.

In step S175, a determination is made as to whether or not the fourth time t4 has exceeded the threshold td. When it is determined to have exceeded the threshold, the sequence transitions to step S176. When it is determined to have not exceeded the threshold, step S174 is resumed, and the power supply to the first outdoor fan 28a continues to be on.

In step S176, a determination is made as to whether or not the discharge pressure P2 has exceeded the threshold Pb. When it is determined to have exceeded the threshold, the sequence transitions to step S177, and when it is determined to have not exceeded the threshold, step S172 is resumed.

In step S177, a determination is made as to whether or not the fan rotational speed of the first outdoor fan 28a has reached the first rotational speed. When it is determined to have done so, the third control is ended. When it is determined to have not, the process of step S177 is repeated.

To give a description using FIG. 9 of an example of the fluctuation in fan rotational speed that occurs over time in the first outdoor fan 28a and the second outdoor fan 28b during the third control, first, in the third control, the fan rotational speed of the second outdoor fan 28b ultimately reaches zero because the power supply to the second outdoor fan 28b is kept off. On the other hand, the power supply to the first outdoor fan 28a is turned on and off based on the discharge pressure P2, similar to the first control. When the discharge pressure P2 exceeds the threshold Pb, the third control is ended. Therefore, the fan rotational speed fluctuates based on this.

As described above, during the fan on/off control, after the second control has been performed, the third control is performed wherein the power supply to the first outdoor fan 28a is turned on and off and the power supply to the second outdoor fan 28b is turned off, leaving the second outdoor fan in a non-rotating state.

### (4) Characteristics

### (4-1)

In the air conditioning apparatus 1 of the present embodiment, during low blow rate demand in which a low blow rate is desired in the outdoor fans (the first outdoor fan 28a and the second outdoor fan 28b) such that the high-low differential pressure P is equal to or less than the threshold B, the controller 91 (specifically, the fan controller 95) first makes a transition from the first operating state in which the first outdoor fan 28a and the second outdoor fan 28b are operating, to the second operating state in which the first outdoor fan 28a continues to operate and the power supply to the second outdoor fan 28b is turned off.

As described above, when the transition from the first operating state to the second operating state is made and when the fan rotational speed approaches zero in the second outdoor fan from which the power supply has been turned off, there is concern that the quantity of air passed through the outdoor heat exchanger by the operating first outdoor fan will suddenly decrease, and the total quantity of air passing through the outdoor heat exchanger, which is ensured by the first outdoor fan and the second outdoor fan, will rapidly decrease.

In view of this, in the air conditioning apparatus 1, after transitioning from the first operating state to the second operating state, the controller 91 (specifically, the fan controller 95) initiates the fan on/off control for turning the power supply to the first outdoor fan 28a and the second outdoor fan 28b on and off on the basis of the timer 96 (measurement by the timer 96 of the predetermined time). Specifically, the fan controller 95 initiates the fan on/off control before the predetermined time passes the first threshold.

It is thereby possible to suppress the decrease in total air quantity passing through the outdoor heat exchanger 23, which is ensured by the plurality of outdoor fans 28a, 28b. It is also possible to reduce the total blow rate (air discharge rate) of the plurality of outdoor fans 28a, 28b by turning to the power supply to the first outdoor fan 28a and the second outdoor fan 28b on and off.

### (4-2)

In the air conditioning apparatus 1 of the present embodiment, after transitioning from the first operating state to the second operating state during the blow rate reduction control, within the fan on/off control, the controller 91 (specifically, the fan controller 95) performs the first control for operating the first outdoor fan 28a at the first rotational speed, which is the minimum rotational speed at which the fans can be operated, and turning the power supply to the second outdoor fan 28b on and off.

It is thereby possible to smoothly reduce the total blow rate (air discharge rate) of the plurality of outdoor fans 28a, 28b while suppressing the sudden decrease in the quantity of air passing through the outdoor heat exchanger 23 which is ensured by the first outdoor fan 28a continuing to operate at the first rotational speed (i.e., while suppressing the decrease in the total quantity of air passing through the outdoor heat exchanger 23 ensured by the plurality of outdoor fans 28a, 28b).

### (4-3)

In the air conditioning apparatus 1 of the present embodiment, after having performed the first control within the fan on/off control, the controller 91 (specifically, the fan controller 95) performs the second control for turning the power supply to the first outdoor fan 28a on and off and turning the power supply to the second outdoor fan 28b on and off.

It is thereby possible to reduce the total blow rate (air discharge rate) of the plurality of outdoor fans 28a, 28b, more so than when the first control is being performed, while suppressing the decrease in the quantity of air passed through the outdoor heat exchanger by one outdoor fan due to air being drawn in through the outlet of the other outdoor fan (i.e., while suppressing the decrease in the total quantity of air passing through the outdoor heat exchanger 23 ensured by the plurality of outdoor fans 28a, 28b).

### (4-4)

In the air conditioning apparatus 1 of the present embodiment, after having performed the second control within the fan on/off control, the controller 91 (specifically, the fan controller 95) performs the third control for turning the power supply to the first outdoor fan 28a on and off and turning the power supply to the second outdoor fan 28b off, leaving the second outdoor fan in a non-rotating state.

It is thereby possible to reduce the total blow rate (air discharge rate) of the plurality of outdoor fans 28a, 28b, more so than when the second control is being performed.

### (4-5)

In the air conditioning apparatus 1 of the present embodiment, during the first control, the fan controller 95 turns the power supply to the second outdoor fan 28b on and off based on the discharge pressure P2 of the compressor 21 (an operating state amount equivalent to the condensation pressure Pc). During the second control, the fan controller 95 turns the power supply to the first outdoor fan 28a on and off based on the discharge pressure P2 of the compressor 21 (an operating state amount equivalent to the condensation pressure Pc). During the third control, the fan controller 95 turns the power supply to the first outdoor fan 28a on and off based on the discharge pressure P2 of the compressor 21 (an operating state amount equivalent to the condensation pressure Pc).

The condensation capability of the outdoor heat exchanger 23 during the air-cooling operation can thereby be regulated.

### (4-6)

In the air conditioning apparatus 1 of the present embodiment, during the first control, the second control, and the third control, after the power supply to the first outdoor fan 28a and/or the second outdoor fan 28b has been turned on and the fan rotational speeds of these outdoor fans 28a, 28b have reached the first rotational speed, which is the minimum rotational speed at which the fans can be operated, the first outdoor fan 28a and/or the second outdoor fan 28b is operated at the first rotational speed.

This is because although it is preferable to operate the first outdoor fan 28a and/or the second outdoor fan 28b at a fan rotational speed below the minimum rotational speed in order to reduce the fan blow rate, there is concern that operating the first outdoor fan 28a and/or the second outdoor fan 28b at a fan rotational speed below the minimum rotational speed will affect the bearings and/or the fan motors.

In the fan on/off control, because the first outdoor fan 28a and/or the second outdoor fan 28b is operated at the first rotational speed after the first outdoor fan 28a and/or the second outdoor fan 28b has reached the first rotational speed, the total blow rate of the first outdoor fan 28a and the second outdoor fan 28b can be appropriately reduced by performing the fan on/off control.

### (5) Modifications

The present invention was described above based on the drawings, but the specific configuration is not limited to the above and can be altered within a range that does not deviate from the scope of the invention as defined by the claims.

### (5-1) Modification 1A

In the above, the fan controller 95 was described as performing the fan on/off control on the basis of the timer 96 after having transitioned the first outdoor fan 28a and the second outdoor fan 28b to the second operating state, but the fan controller 95 is not limited to doing so.

For example, the fan controller 95 may perform (initiate) the fan on/off control on the basis of observations of electric current values relating to the first outdoor fan motor 28ma and the second outdoor fan motor 28mb (the fan motors), after having transitioned to the second operating state.

In this case, the electric current values supplied to the first outdoor fan motor 28ma and the second outdoor fan motor 28mb are stored in the storage part 92. The fan controller 95 performs (initiates) the fan on/off control by observing the electric current values supplied to the first outdoor fan motor 28ma and the second outdoor fan motor 28mb stored in the storage part 92.

More specifically, in the second operating state, the difference between the electric current value supplied to the first outdoor fan motor 28ma and the electric current value supplied to the second outdoor fan motor 28mb, as assumed to be in effect during the sudden decrease in the total quantity of air passing through the outdoor heat exchanger 23 which is ensured by the plurality of outdoor fans 28a, 28b, is provided in advance as a second threshold. The second threshold is stored in the storage part 92.

After having transitioned to the second operating state, the fan controller 95 performs (initiates) the fan on/off control before the difference between the electric current value supplied to the first outdoor fan motor 28ma and the electric current value supplied to the second outdoor fan motor 28mb exceeds the second threshold.

The fan controller 95 may also perform (initiate) the fan on/off control on the basis of observations of the fan rotational speeds of the first outdoor fan and the second outdoor fan 28b after having transitioned to the second operating state.

In this case, during the second operating state, the difference between the fan rotational speed of the first outdoor fan 28a and the fan rotational speed of the second outdoor fan 28b, as assumed to be in effect during the sudden decrease in the total quantity of air passing through the outdoor heat exchanger 23 which is ensured by the plurality of outdoor fans 28a, 28b, is provided in advance as a third threshold. The third threshold is stored in the storage part 92. After having transitioned to the second operating state, the fan controller 95 then performs (initiates) the fan on/off control before the difference between the fan rotational speed of the first outdoor fan 28a and the fan rotational speed of the second outdoor fan 28b exceeds the third threshold.

The same effects are achieved in such cases as those described above.

### (5-2) Modification 1B

In the above, during the second control, the first outdoor fan 28a and the second outdoor fan 28b are activated at different times, but they may be activated simultaneously. The phases of the fan rotational speeds of the first outdoor fan 28a and the second outdoor fan 28b during the second control shown in FIG. 9 will then be the same phase.

The same effects as those described above are achieved in this case.

### (5-3) Modification 1C

In the above, during the various controls in the fan on/off control, power is supplied to the first outdoor fan 28a and/or the second outdoor fan 28b as appropriate based on whether or not the discharge pressure P2, which is an operating state amount equivalent to the condensation pressure Pc, has exceeded the threshold Pa, but the supply of power is not limited to this option alone.

For example, power may be supplied based on whether or not the condensation temperature Tc of refrigerant in the outdoor heat exchanger 23, as detected by the outdoor heat exchange temperature sensor 33, exceeds the threshold Ta (30°C, for example).

A condensation pressure sensor (not shown) for directly detecting the condensation pressure Pc of refrigerant in the outdoor heat exchanger 23 may be provided, and power may be supplied based on the condensation pressure Pc detected by this condensation pressure sensor. The condensation temperature Tc of refrigerant in the outdoor heat exchanger 23 (as detected by the outdoor heat exchange temperature sensor 33) may be converted to calculate the condensation pressure Pc, and power may be supplied based on this calculated condensation pressure Pc.

### (5-4) Modification ID

In the above, when the discharge pressure P2 exceeds the threshold Pb and/or when the high-low differential pressure P is equal to or less than the threshold B during the second control and the third control, the first control and the second control are resumed, respectively. This is because it means that the fan rotational speed continues to be increased smoothly. Control is not limited to this option alone, however, and depending on the situation, there may be cases in which normal control is resumed.

### (5-5) Modification 1E

In the above, a case in which the air-cooling operation is performed at a time of low outside air was described as an example of an instance of low blow rate demand wherein a low blow rate in the outdoor fans (the first outdoor fan 28a and the second outdoor fan 28b) is desired, such that the high-low differential pressure P is equal to or less than the threshold B, but the present invention is not limited to this option alone.

The control disclosed in the above embodiment can be applied in situations such as the high-low differential pressure P being equal to or less than the threshold B, and the control can therefore also be applied to instances of startup after the thermo system turns off, and/or instances of a reduction in the number of operating indoor units and a reduction in the rotational speed of the compressor during normal control, for example.

### (5-6) Modification IF

In the above embodiment, the first outdoor fan 28a and the second outdoor fan 28b are assumed to be the same model, but these fans may be different models as well. In this case, there are cases in which the first outdoor fan 28a and the second outdoor fan 28b have a different first rotational speed as the minimum rotational speed at which they can operate.

### (5-7) Modification 1G

In the implemented system described above, the description of the refrigeration apparatus according to the present invention was restricted to an air conditioning apparatus, but the refrigeration apparatus is not limited to this example, and may be a heat-pump type hot water supply apparatus.

### INDUSTRIAL APPLICABILITY

The present invention can be applied to the outdoor units of various refrigeration apparatuses comprising a plurality of outdoor fans.

### REFERENCE SIGNS LIST

- 1: Air conditioning apparatus (refrigeration apparatus)
- 2: Outdoor unit
- 23: Outdoor heat exchanger
- 28a: First outdoor fan
- 28b: Second outdoor fan
- 28ma: First outdoor fan motor
- 28mb: Second outdoor fan motor
- 95: Fan controller
- 96: Timer

### CITATION LIST

### PATENT LITERATURE

[Patent Literature 1] Japanese Laid-open Patent Application No. 5-71791
[Patent Literature 2] Japanese Laid-open Patent Application No. 4-236072

## Claims

1. An outdoor unit (2) of a refrigeration apparatus (1), comprising:
an outdoor heat exchanger (23);
a first outdoor fan (28a) and a second outdoor fan (28b) for generating an air flow passing through the outdoor heat exchanger (23); and
**characterized by**
a fan controller (95) for transitioning from a first operating state in which the first outdoor fan (28a) and the second outdoor fan (28b) operate, to a second operating state in which the first outdoor fan (28a) continues to operate and the power supply to the second outdoor fan (28b) is cut off for a predetermined time, during low blow rate demand in which a low blow rate is desired;
the fan controller (95), after transitioning to the second operating state and before the predetermined time passes a first threshold which is evaluated using a timer (96), performing fan on/off control for turning the power supply to the first outdoor fan (28a) and the second outdoor fan (28b) on and off, on the basis of observation of an electric current value relating to fan motors (28ma, 28mb), or observation of the fan rotational speeds.

2. The outdoor unit (2) of a refrigeration apparatus (1) according to claim 1, wherein the fan controller (95), after transitioning to the second operating state, performs a first control for operating the first outdoor fan (28a) at a first rotational speed and turning the power supply to the second outdoor fan (28b) on and off within the fan on/off control.

3. The outdoor unit (2) of a refrigeration apparatus (1) according to claim 2, wherein the fan controller (95), after performing the first control within the fan on/off control, performs a second control for turning the power supply to the first outdoor fan (28a) on and off and turning the power supply to the second outdoor fan (28b) on and off.

4. The outdoor unit (2) of a refrigeration apparatus (1) according to claim 3, wherein the fan controller (95), after performing the second control within the fan on/off control, performs a third control for turning the power supply to the first outdoor fan (28a) on and off and turning off the power supply to the second outdoor fan (28b), causing the second outdoor fan to cease rotating.

5. The outdoor unit (2) of a refrigeration apparatus (1) according to claim 2 or 4, wherein the fan controller (95) turns the power supply to the second outdoor fan (28b) on and off during the first control, the power supply to either the first outdoor fan (28a) or the second outdoor fan (28b) on and off during the second control, and the power supply to the first outdoor fan (28a) on and off during the third control, based on the condensation temperature or condensation pressure of the refrigerant in the outdoor heat exchanger (23).

6. The outdoor unit (2) of a refrigeration apparatus (1) according to any of claims 2 through 5, wherein
the first rotational speed is the minimum rotational speed at which the first outdoor fan (28a) and the second outdoor fan (28b) can be operated;
within the first control, the fan controller (95) turns on the power supply to the second outdoor fan (28b) and then operates the second outdoor fan (28b) at the first rotational speed after the rotational speed of the second outdoor fan (28b) has reached the first rotational speed;
within the second control, the fan controller (95) turns on the power supply to both the first outdoor fan (28a) and the second outdoor fan (28b) and then operates both the first outdoor fan (28a) and the second outdoor fan (28b) at the first rotational speed after the rotational speeds of the first outdoor fan (28a) and the second outdoor fan (28b) have both reached the first rotational speed; and
within the third control, the fan controller (95) turns on the power supply to the first outdoor fan (28a) and then operates the first outdoor fan (28a) at the first rotational speed after the rotational speed of the first outdoor fan (28a) has reached the first rotational speed.

## Patentansprüche

1. Außeneinheit (2) einer Kühlvorrichtung (1), umfassend:
einen Außenwärmetauscher (23);
ein erstes Außengebläse (28a) und ein zweites Außengebläse (28b) zum Erzeugen eines Luftstroms, der durch den Außenwärmetauscher (23) strömt; und
**gekennzeichnet durch**
eine Gebläsesteuerung (95) zum Übergehen von einem ersten Betriebszustand, in dem das erste Außengebläse (28a) und das zweite Außengebläse (28b) betrieben werden, zu einem zweiten Betriebszustand, in dem der Betrieb des ersten Außengebläses (28a) fortgesetzt wird und die Stromversorgung des zweiten Außengebläses (28b) für eine vorbestimmte Zeit während des Vorliegens eines geringen Blasratenbedarfs, bei dem eine geringe Blasrate gewünscht wird, unterbrochen wird;
wobei die Gebläsesteuerung (95) nach dem Übergehen zu dem zweiten Betriebszustand und vor Ablauf der vorbestimmten Zeit einen ersten Schwellenwert überschreitet, der unter Verwendung eines Zeitgebers (96) ausgewertet wird, eine Ein-/Aus-Gebläsesteuerung zum Ein- und Ausschalten der Stromversorgung des ersten Außengebläses (28a) und des zweiten Außengebläses (28b) basierend auf der Beobachtung eines elektrischen Stromwerts, der sich auf Gebläsemotoren (28ma, 28mb) bezieht, oder auf der Beobachtung der Gebläsedrehzahlen durchführt.

2. Außeneinheit (2) einer Kühlvorrichtung (1) nach Anspruch 1, wobei die Gebläsesteuerung (95) nach dem Übergehen zu dem zweiten Betriebszustand eine erste Steuerung zum Betreiben des ersten Außengebläses (28a) bei einer ersten Drehzahl durchführt und die Stromversorgung des zweiten Außengebläses (28b) innerhalb der Gebläse-Ein-/Aus-Steuerung ein- und ausschaltet.

3. Außeneinheit (2) einer Kühlvorrichtung (1) nach Anspruch 2, wobei die Gebläsesteuerung (95) nach Durchführen der ersten Steuerung innerhalb der Gebläse-Ein-/Aus-Steuerung eine zweite Steuerung zum Ein- und Ausschalten der Stromversorgung des ersten Außengebläses (28a) und zum Ein- und Ausschalten der Stromversorgung des zweiten Außengebläses (28b) durchführt.

4. Außeneinheit (2) einer Kühlvorrichtung (1) nach Anspruch 3, wobei die Gebläsesteuerung (95) nach Durchführen der zweiten Steuerung innerhalb der Gebläse-Ein-/Aus-Steuerung eine dritte Steuerung zum Ein- und Ausschalten der Stromversorgung des ersten Außengebläses (28a) und zum Ausschalten der Stromversorgung des zweiten Außengebläses (28b), das bewirkt, dass sich das zweite Außengebläse nicht mehr dreht, durchführt.

5. Außeneinheit (2) einer Kühlvorrichtung (1) nach Anspruch 2 oder 4, wobei die Gebläsesteuerung (95) die Stromversorgung des zweiten Außengebläses (28b) während der ersten Steuerung ein- und ausschaltet, die Stromversorgung entweder des ersten Außengebläses (28a) oder des zweiten Außengebläses (28b) während der zweiten Steuerung ein- und ausschaltet und die Stromversorgung des ersten Außengebläses (28a) während der dritten Steuerung basierend auf der Kondensationstemperatur oder dem Kondensationsdruck des Kältemittels im Außenwärmetauscher (23) ein- und ausschaltet.

6. Außeneinheit (2) einer Kühlvorrichtung (1) nach einem der Ansprüche 2 bis 5, wobei
die erste Drehzahl die minimale Drehzahl, bei der das erste Außengebläse (28a) und das zweite Außengebläse (28b) betrieben werden können, ist;
innerhalb der ersten Steuerung die Gebläsesteuerung (95) die Stromversorgung des zweiten Außengebläses (28b) einschaltet und dann das zweite Außengebläse (28b) bei der ersten Drehzahl betreibt, nachdem die Drehzahl des zweiten Außengebläses (28b) die erste Drehzahl erreicht hat;
innerhalb der zweiten Steuerung die Gebläsesteuerung (95) die Stromversorgung sowohl des ersten Außengebläses (28a) als auch des zweiten Außengebläses (28b) einschaltet und dann sowohl das erste Außengebläse (28a) als auch das zweite Außengebläse (28b) bei der ersten Drehzahl betreibt, nachdem die Drehzahlen des ersten Außengebläses (28a) und des zweiten Außengebläses (28b) beide die erste Drehzahl erreicht haben; und
innerhalb der dritten Steuerung die Gebläsesteuerung (95) die Stromversorgung des ersten Außengebläses (28a) einschaltet und dann das erste Außengebläse (28a) bei der ersten Drehzahl betreibt, nachdem die Drehzahl des ersten Außengebläses (28a) die erste Drehzahl erreicht hat.

## Revendications

1. Unité externe (2) d'un appareil de réfrigération (1), comprenant :
un échangeur de chaleur externe (23) ;
un premier ventilateur externe (28a) et un deuxième ventilateur externe (28b) pour générer un flux d'air traversant l'échangeur de chaleur externe (23) ; et
**caractérisée par**
un organe de commande de ventilateur (95) pour passer d'un premier état de fonctionnement dans lequel le premier ventilateur externe (28a) et le deuxième ventilateur externe (28b) fonctionnent, à un deuxième état de fonctionnement dans lequel le premier ventilateur externe (28a) continue de fonctionner et l'alimentation électrique du deuxième ventilateur externe (28b) est coupée pendant un temps prédéterminé, au cours d'une demande de bas débit de soufflage dans laquelle un bas débit de soufflage est souhaité ;
l'organe de commande de ventilateur (95), après le passage dans le deuxième état de fonctionnement et avant que le temps prédéterminé ne passe un premier seuil qui est évalué en utilisant une minuterie (96), effectuant une commande de marche/arrêt de ventilateur pour activer et désactiver l'alimentation électrique du premier ventilateur externe (28a) et du deuxième ventilateur externe (28b) sur la base d'une observation d'une valeur de courant électrique relative à des moteurs de ventilateur (28ma, 28mb) ou d'une observation des vitesses de rotation de ventilateur.

2. Unité externe (2) d'un appareil de réfrigération (1) selon la revendication 1, dans laquelle l'organe de commande de ventilateur (95), après le passage dans le deuxième état de fonctionnement, effectue une première commande pour faire fonctionner le premier ventilateur externe (28a) à une première vitesse de rotation et pour activer et désactiver l'alimentation électrique du deuxième ventilateur externe (28b) à l'intérieur de la commande de marche/arrêt de ventilateur.

3. Unité externe (2) d'un appareil de réfrigération (1) selon la revendication 2, dans laquelle l'organe de commande de ventilateur (95), après l'exécution de la première commande à l'intérieur de la commande de marche/arrêt de ventilateur, effectue une deuxième commande pour activer et désactiver l'alimentation électrique du premier ventilateur externe (28a) et pour activer et désactiver l'alimentation électrique du deuxième ventilateur externe (28b).

4. Unité externe (2) d'un appareil de réfrigération (1) selon la revendication 3, dans laquelle l'organe de commande de ventilateur (95), après l'exécution de la deuxième commande à l'intérieur de la commande de marche/arrêt de ventilateur, effectue une troisième commande pour activer et désactiver l'alimentation électrique du premier ventilateur externe (28a) et pour désactiver l'alimentation électrique du deuxième ventilateur externe (28b), en provoquant l'arrêt de la rotation du deuxième ventilateur externe.

5. Unité externe (2) d'un appareil de réfrigération (1) selon la revendication 2 ou 4, dans laquelle l'organe de commande de ventilateur (95) active et désactive l'alimentation électrique du deuxième ventilateur externe (28b) au cours de la première commande, active et désactive l'alimentation électrique du premier ventilateur externe (28a) ou du deuxième ventilateur externe (28b) au cours de la deuxième commande, et active et désactive l'alimentation électrique du premier ventilateur externe (28a) au cours de la troisième commande, sur la base de la température de condensation ou de la pression de condensation du frigorigène dans l'échangeur de chaleur externe (23).

6. Unité externe (2) d'un appareil de réfrigération (1) selon l'une quelconque des revendications 2 à 5, dans laquelle
la première vitesse de rotation est la vitesse de rotation minimale à laquelle le premier ventilateur externe (28a) et le deuxième ventilateur externe (28b) peuvent fonctionner;
à l'intérieur de la première commande, l'organe de commande de ventilateur (95) active l'alimentation électrique du deuxième ventilateur externe (28b) puis fait fonctionner le deuxième ventilateur externe (28b) à la première vitesse de rotation après que la vitesse de rotation du deuxième ventilateur externe (28b) a atteint la première vitesse de rotation ;
à l'intérieur de la deuxième commande, l'organe de commande de ventilateur (95) active l'alimentation électrique du premier ventilateur externe (28a) et du deuxième ventilateur externe (28b) puis fait fonctionner le premier ventilateur externe (28a) et le deuxième ventilateur externe (28b) à la première vitesse de rotation après que les vitesses de rotation du premier ventilateur externe (28a) et du deuxième ventilateur externe (28b) ont atteint la première vitesse de rotation ; et
à l'intérieur de la troisième commande, l'organe de commande de ventilateur (95) active l'alimentation électrique du premier ventilateur externe (28a) puis fait fonctionner le premier ventilateur externe (28a) à la première vitesse de rotation après que la vitesse de rotation du premier ventilateur externe (28a) a atteint la première vitesse de rotation.
